# EUROPEAN PATENT APPLICATION

(11) **EP 3 605 248 A1**
(43) Date of publication of application: **05.02.2020**
(21) Application number: 18774948.6
(22) Date of filing: 28.02.2018
(51) Int. Cl.: G05B 13/00, B25J 9/22, G05B 15/02, G05B 23/02, G06F 11/28, G06F 11/34

(54) **INFORMATION PROCESSING DEVICE, INFORMATION PROCESSING METHOD, COMPUTER PROGRAM, AND PROGRAM MANUFACTURING METHOD**

(30) Priority: 31.03.2017 JP 2017070633
(71) Applicant: Sony Corporation, Tokyo 108-0075 (JP)
(72) Inventor: YAMAMOTO, Kazunori, Tokyo 1080075 (JP)
(74) Representative: MFG Patentanwälte Meyer-Wildhagen Meggle-Freund Gerhard PartG mbB
(86) International application number: PCT/JP2018/007452
(87) International publication number: WO 2018/180143

(57) **Abstract**

Provided is an information processing apparatus used for program development.

The information processing apparatus includes: a holding unit that holds a behavior verification scenario that defines the order of operation to be invoked; and an evaluation unit that compares operation that the program sequentially invokes with the behavior verification scenario to perform evaluation or verification of the program. The program execution control unit drives the program according to environment information input from the outside, the evaluation unit compares operation sequentially invoked by the program execution control unit according to the environment information with an order of operation defined in the behavior verification scenario to evaluate or verify the program.

## Description

### TECHNICAL FIELD

A technology disclosed in the present specification relates to an information processing apparatus and an information processing method, a computer program, and a program manufacturing method that are used for or support development of a program.

### BACKGROUND ART

Advances in robotics technology in recent years have been remarkable, and have widely spread in work sites in various industrial fields. A robot includes, for example, a plurality of links and joints connecting the links, and is operated by driving each joint using an actuator for joint driving such as a motor.

A robot called an autonomous type or adaptive control type performs behavior control autonomously or adaptively without waiting for an instruction from an operator or a master device. Specifically, the external environment or internal state of the robot is constantly verified (or evaluated or monitored), and operation in which the recognition result of the external environment or internal state conforming to a predetermined transition condition is sequentially activated , so that behavior suitable for the current situation is realized (see, for example, Patent Document 1).

### CITATION LIST

### PATENT DOCUMENT

Patent Document 1: Japanese Patent Application Laid-Open No. 2003-334785

### SUMMARY OF THE INVENTION

### PROBLEMS TO BE SOLVED BY THE INVENTION

An object of a technology disclosed in the present specification is to provide an information processing apparatus and an information processing method, a computer program, and a program manufacturing method that are used for or support development of a program.

### SOLUTIONS TO PROBLEMS

A technology disclosed in the present specification has been made in consideration of the above problems, and a first aspect thereof is an information processing apparatus that processes a program described so that an adaptive control device executes operation according to the environment, the information processing apparatus including:
a holding unit that holds a behavior verification scenario that defines the order of operation to be invoked; and
an evaluation unit that compares operation that the program sequentially invokes with the behavior verification scenario to perform evaluation or verification of the program.

The information processing apparatus may further include a program execution control unit that controls driving of the program according to environment information input from the outside. In this case, the evaluation unit compares the operation sequentially invoked by the program driven by the program execution control unit according to the environment information with the order of the operation defined in the behavior verification scenario, so that the program can be evaluated or verified alone without using a simulator or an actual machine of the adaptive control device.

Alternatively, the evaluation unit compares the operation sequentially invoked by the program driven by the simulator of the adaptive control device with the order of the operation defined in the behavior verification scenario, so that the program can be evaluated or verified on a simulator.

Alternatively, the evaluation unit compares the operation sequentially invoked by the program actually driven on the adaptive control device with the order of the operation defined in the behavior verification scenario, so that the program can be evaluated or verified on an actual machine.

Furthermore, a second aspect of the technology disclosed in the present specification is an information processing method for processing a program described so that an adaptive control device executes operation according to the environment, the information processing method including:
a step of reading a behavior verification scenario that defines the order of operation to be invoked; and
an evaluating step of comparing operation that the program sequentially invokes with the behavior verification scenario to perform evaluation or verification of the program.

Furthermore, a third aspect of the technology disclosed in the present specification is a computer program described in a computer readable format so as to function as:
a holding unit that holds a behavior verification scenario that defines an order of operation to be invoked; and
an evaluation unit that compares operation that the program described so that an adaptive control device executes operation according to an environment sequentially invokes with the behavior verification scenario to perform evaluation or verification of the program.

The computer program according to the third aspect defines a computer program described in a computer readable format so as to realize predetermined processing on a computer. In other words, by installing the computer program according to the claims of the present application into a computer, a cooperative action is exhibited on the computer, and a similar effect to the apparatus according to the first aspect can be obtained.

Furthermore, a fourth aspect of the technology disclosed in the present specification is a program manufacturing method for manufacturing a control program in which an adaptive control device controls operation according to the environment, the program manufacturing method including:
a behavior scenario setting step of setting to the control program a behavior verification scenario that defines an order of operation to be invoked; and
a verification condition setting step of setting to the control program a condition for comparing operation sequentially invoked by the program with the behavior verification scenario to perform evaluation or verification of the program.

### EFFECTS OF THE INVENTION

According to a technology disclosed in the present specification, an information processing apparatus and an information processing method, a computer program, and a program manufacturing method that are used for or support development of a program can be provided.

Note that the effects described in the present specification are merely examples, and the effects of the present invention are not limited thereto. Furthermore, in addition to the above effects, the present invention may further exert additional effects.

Still other objects, features, and advantages of the technology disclosed in the present specification will become apparent from a detailed description based on embodiments as described later and accompanying drawings.

### BRIEF DESCRIPTION OF DRAWINGS

Fig. 1 is a diagram schematically showing an example of a development environment of a control program.
Fig. 2 is a diagram illustrating a distributed development environment of a control program via a network.
Fig. 3 is a diagram illustrating a development environment of a control program for developing a robot.
Fig. 4 is a diagram illustrating a development environment of a control program for developing an autonomous vehicle.
Fig. 5 is a diagram illustrating a development environment of a control program for development of an unmanned aerial vehicle (drone).
Fig. 6 is a diagram showing an example of the configuration of the hardware and software architecture mounted on an actual machine of an autonomous operation device 100.
Fig. 7 is a diagram schematically showing a configuration example of an application program.
Fig. 8 is a diagram showing a configuration example of a software module in a single operation mode.
Fig. 9 is a diagram showing a configuration example of a software module in a simulation mode.
Fig. 10 is a diagram showing a configuration example of a software module in an actual machine operation mode.
Fig. 11 is a flowchart showing a processing procedure for evaluating and verifying a behavior plan.
Fig. 12 is a diagram showing an example of a development workflow of the behavior plan.
Fig. 13 is a diagram schematically showing a configuration example of a GUI tool applied to creation of a behavior verification scenario.
Fig. 14 is a diagram showing a system configuration according to an application example of evaluation and verification method of the behavior plan.

### MODE FOR CARRYING OUT THE INVENTION

Hereinafter, embodiments of the technology disclosed in the present specification will be described in detail with reference to the drawings.

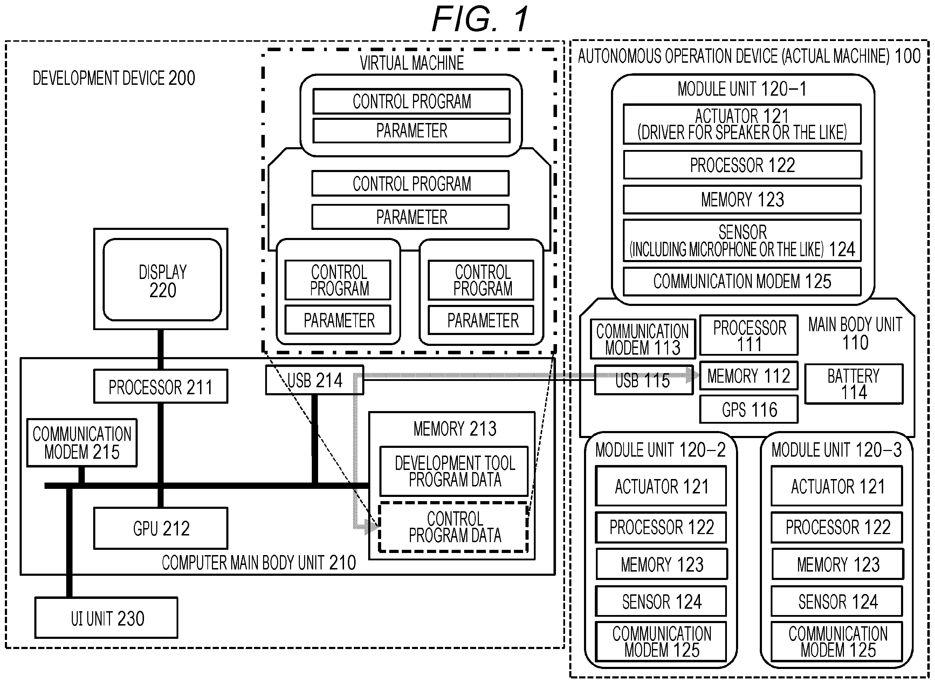

Fig. 1 schematically shows an example of a development environment of a control program. Under the development environment, an autonomous operation device (actual machine) 100 to be developed and a development device 200 that creates a control program in the autonomous operation device 100 are disposed.

Here, the autonomous operation device 100 is a device that controls its own behavior by autonomous or adaptive control, and includes various forms such as a robot, an unmanned aerial vehicle, and an autonomously driving car.

The autonomous operation device 100 includes a main body unit 110 that generally controls the operation of the entire system 100, and a plurality of module units 120-1, 120-2, .... Although only three module units are illustrated in Fig. 1 for simplification, an autonomous operation device including four or more module units, and an autonomous operation device including only two or less module units are also assumed.

One module unit 120 includes an actuator 121, a sensor 124, a processor 122, a memory 123, and a communication modem 125. Note that, although not shown for simplicity, the units 121 to 125 in the module unit 120 are interconnected by an internal bus.

The actuator 121 is, for example, a motor for rotationally driving a joint, or a driver for a speaker. The sensor 124 is a sensor that detects an output state of an actuator such as a joint rotation angle, an angular velocity, or a volume of a speaker, a sensor that detects an external force or other external environment, or the like.

The processor 122 controls operation in the module including drive control (motor controller) of the actuator 121 and recognition processing of detection signals from the sensor 124. The memory 123 is used by the processor 122 to store control information of the actuator, a detection value of a sensor, and the like.

The communication modem 125 is hardware for performing mutual communication between the module unit 120 and the main body unit 110 or between the module unit 120 and another module unit, and may be either a wireless modem or a wired modem. For example, the processor 123 receives a command signal of driving or the like of the actuator 121 from the main body unit 110, and transmits detection data by the sensor 124 to the main body unit 110 via the communication modem 125. Furthermore, the module unit 120 can also communicate with an external device such as the development device 200 via the communication modem 125.

The main body unit 110 includes a processor 111, a memory 112, a communication modem 113, a battery 114, a universal serial bus (USB) port 115, and a global positioning system (GPS) 116. Note that, although not shown for simplicity, the units 111 to 116 in the main body unit 110 are interconnected by an internal bus.

The processor 111 centrally controls the operation of the entire autonomous operation device 100 in accordance with a program stored in the memory 112. Furthermore, the battery 114 is a drive power supply of the autonomous operation device 100, and supplies power to the main body unit 110 and each module unit 120.

The communication modem 113 is hardware for performing mutual communication between the main body unit 120 and each module unit 120, and may be either a wireless modem or a wired modem. For example, the processor 111 transmits a command signal of driving or the like of the actuator 121 to each module unit 120, and receives a recognition result based on the detection value of the sensor 122 in each module unit 120 via the communication modem 113. Furthermore, the main body unit 110 can also communicate with an external device such as the development device 200 via the communication modem 113.

The USB port 115 is used to connect an external device to the main body unit 110 using a USB bus (cable). In the present embodiment, it is assumed that the development device 200 is connected to the main body unit 110 using the USB port 115. For example, the control program created on the development device 200 can be installed on the autonomous operation device 100 via the USB port 115. Note that the USB is an example of an interface standard for connecting an external device to the autonomous operation device 100, and may be configured to connect an external device in accordance with another interface standard.

Note that, although not shown, there are a data bus and a control bus that connect the main body unit 110 and hardware such as each module unit.

The development device 200 configured of, for example, a personal computer, and includes a computer main body unit 210, a display 220 such as a liquid crystal panel, and a user interface (UI) unit 230 including a mouse, a keyboard, and the like. Furthermore, the computer main body unit 210 includes a processor 211, a graphic processing unit (GPU) 212, a memory 213, a USB port 214, and a communication modem 215. However, a configuration example in which the function of the GPU 212 is included in the processor 211 can also be considered. Furthermore, the computer main body unit 210 includes hardware components other than those illustrated, and the units are interconnected by a bus.

An operating system (OS) runs on the development device 200. The processor 211 can load a desired application program into the memory 212 and execute the application program under the execution environment provided by the OS.

In the present embodiment, a development tool program for creating a control program for the autonomous operation device 100 is assumed as one of the application programs. The development tool program is developed on the memory 213 of the development device 200 together with data required to execute the program.

The development tool program presents a graphical user interface (GUI) for program development on the screen of the display 220. The program developer can input data and programs via the user interface 230 while checking the contents of the GUI screen. Furthermore, the development tool program includes a compiler related to the created control program, a debugger, a simulation, a function for checking the operation of the control program using 3D graphics animation, or the like, and the developer can issue an instruction on execution of these functions on the GUI screen.

The control program created using the development tool program includes a control program executed on the processor 111 of the main body unit 110 on the actual machine of the autonomous operation device 100 and data such as parameters used by the control program, and a control program for controlling driving of the actuator 121 in the processor 122 of each module unit 120 and data such as parameters used by the control program. The parameters used by the control program include data such as control parameters such as P (proportional control), I (integral control), and D (derivative control) of a motor as an actuator. In the present specification, the program part and data may be collectively referred to as "control program".

The control program created using the development tool program is stored in the memory 213. Furthermore, the control program on the memory 213 can be transferred to the autonomous operation device 100 via the USB port 214. Alternatively, the control program on the memory 213 can be transferred to the module unit 120 in the autonomous operation device 100 via the communication modem 215.

Furthermore, for the control program created on the development device 200 using the development tool program, operation verification and correction of control data and program can be performed using a development tool program or data using 3D graphics animation (hereinafter the program for development tool and the data are also collectively referred to as "development tool program"). Generally, this type of development tool program includes a function to generate 3D graphics animation of the actual machine operation of the autonomous operation device 100 according to the control program, and the developer can perform verification of the operation of the control program developed by the developer himself/herself and correction of data and programs in parallel using the 3D graphics animation displayed on the display 220.

In the present embodiment, it is assumed that a development tool program includes a function called a physics engine. The physics engine is a computer program having a function to operate a physical phenomenon on the basis of the physical law of the operation of the real autonomous operation device 100, and considers the physical characteristics of the autonomous operation device 100 and further the realistic external environment to generate operation similar to real and display the result on the display 220. Relative to the actual machine of the autonomous operation device 100, a virtual autonomous operation device 100 that operates in 3D graphics animation space using a physics engine instead of a motor of an actual machine is also referred to as a virtual machine (computer program and data including data for 3D graphics animation).

For example, if the autonomous operation device 100 is a robot, the physics engine, while considering the weight and moment of each link of the robot arm and joints, and the characteristics of actuators for driving joints, calculates the physical action between the virtual physics environment and the virtual machine represented on the development tool program (ground contact with the ground, collision with an obstacle, or the like) on the basis of the physical law in the operation of the control program of a virtual machine created by imitating a robot to calculate the motion of the entire virtual machine as if the actuator of the robot were actually driving, and causes the display 220 to display 3D graphics animation reproducing realistic operation of the robot by a virtual machine.

The virtual machine is a control program and data configured to operate on a development tool program including a physics engine and 3D graphics animation, and is stored in the memory 213. Preferably, the control program and data are modularized in units operating on the processor of each module of the actual machine. In order to operate the virtual machine as if it were the actual machine on 3D graphics space, the control program of the virtual machine realizes a function corresponding to the operation of the processor (for example, motor controller) 122 of the actual machine as a part of the program. Furthermore, the control program of this virtual machine is programmed so as to invoke a physics engine function that reproduces the operation corresponding to the actuator 121 (for example, motor) of each module unit 120 of the actual machine by 3D graphics animation by using an application programming interface (API) or a function. Moreover, data used in physical calculation in the physics engine (a control parameter set for the actuator, weight of link, inertia, or the like) is stored in the memory 213 together with the control program, is read from the memory 213 along with the execution of the control program, and used in the control program.

Furthermore, the same API or function as that provided by the basic OS operating in the actual machine, that is, the autonomous operation device 100 side, is used as the API or function for issuing an instruction to the program module for realizing the physics engine function, so that the program created by the development tool program can be operated as it is on the OS on the actual machine. Moreover, since the actual physical phenomenon can be reproduced by the physics engine function, the program developed using the development tool program is directly uploaded to the autonomous operation device 100 via the USB port 214 or the like and executed, so that the operation checked by the development tool program can be realized also on the actual machine.

Furthermore, the control program of the autonomous operation device 100 can also be developed by dividing it into module units using the development tool program. Also, in this case, the control program can be uploaded to the autonomous operation device 100 in module units. For example, a developer in charge of developing the hardware and control program of only the module unit 120-1 can connect his/her development device 200 to the corresponding module unit 120-1 of the autonomous operation device 100 via the communication modem 215 to upload the created program or data to the memory 124 in the module unit 120-1.

The development of the entire autonomous operation device 100 can be promoted in a distributed development environment by sharing the development of hardware and programs by module units among a plurality of developers or a plurality of development vendors.

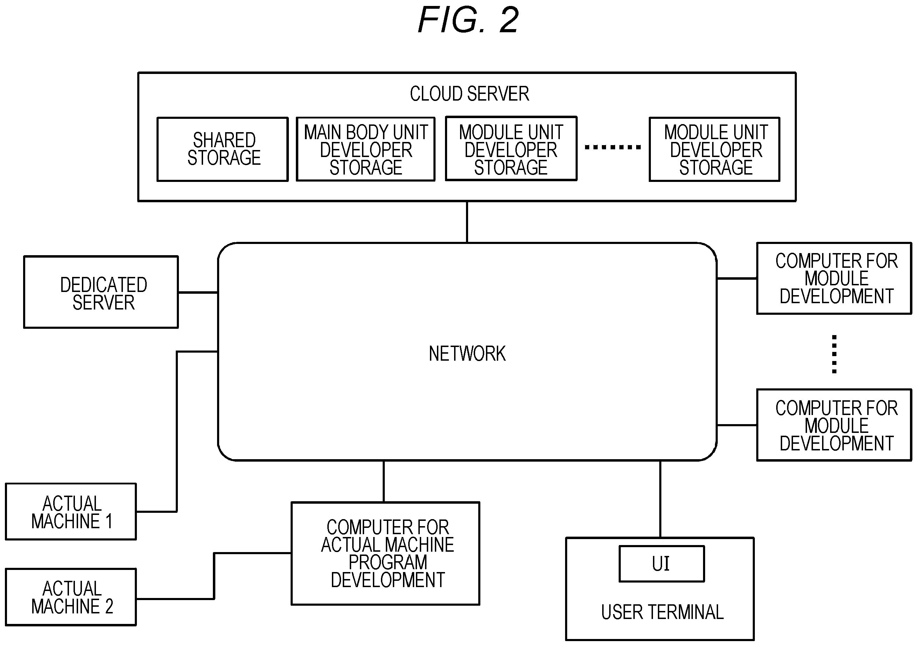

Fig. 2 illustrates a distributed development environment of a control program via a network. In the distributed development environment shown in Fig. 2, development is entrusted to individual developers or development vendors for each module. However, in addition to the module unit which is a hardware component of the autonomous operation device 100 shown in Fig. 1, the module in Fig. 2 may also indicate a module of control software of the autonomous operation device 100.

Each program developer responsible for developing the control program in the main body unit or module unit of the autonomous operation device 100 creates a control program of the main body unit or module unit that he/she is in charge of, using the module development computer. For example, the above-described development tool program is operating on the module development computer. Each module development computer is connected to a network. Then, each program developer may provide a self-developed control program or the like in a shared storage on a cloud server, own dedicated storage (in other words, the main body unit developer storage, the module unit developer storage), or a storage provided in the dedicated server. Furthermore, a control program or the like may be shared by a manager, a developer, a customer, or a user who has an account in a storage such as a server.

A developer in charge or control of control program development for the entire actual machine of the autonomous operation device 100 receives provision of control programs for the main body unit and each module unit via a network. Specifically, the actual machine program development computer used by the developer of the entire actual machine receives each control program by direct communication with a shared storage or developer storage on a cloud server, a dedicated server, or a module development computer of each developer. However, the network receiving the provision of the control program may be configured to be either wired or wireless.

The actual machine program development computer used by the developer of the entire actual machine corresponds to the development device 200 shown in Fig. 1, and includes a function capable of performing operation using a physics engine on the development tool program, and displaying the operation of the virtual machine corresponding to the actual machine by 3D graphics animation. Therefore, the actual machine program development computer can check and verify the operation of the control program of the main body unit 110 and all the module units 120 through the display of 3D graphics animation of a virtual machine using a physics engine function of the development tool program.

Moreover, each control program can be corrected in parallel with the execution of the developed control program on the actual machine program development computer. Therefore, the developer of the entire actual machine and the developer who is in charge of each module unit also efficiently co-develop the control program of the entire actual machine. Furthermore, the control program corrected on the actual machine program development computer can be provided again to the developer in charge of the module unit to have the final program product completed. For example, co-development can be smoothly promoted by managing the control program in module units, such as arranging a storage dedicated to the main body unit and each module unit on a cloud server.

The control program whose operation has been checked and verified (in other words, completed) on the actual machine program development computer used by the developer of the entire actual machine can be directly uploaded from the development device 200 to the autonomous operation device 100 of the actual machine via the USB port 214. Alternatively, the control program for the entire actual machine or each module unit can be uploaded to the actual machine via a wired or wireless network.

Furthermore, a form of uploading a control program from a dedicated server to the actual machine is also assumed. For example, a control program in which a user of an actual machine may log in to a dedicated server using an account he/she has via a user interface (keyboard, mouse, touch panel, or the like) of his/her user terminal, and further select a control program to be downloaded or uploaded to the actual machine to perform downloading or uploading.

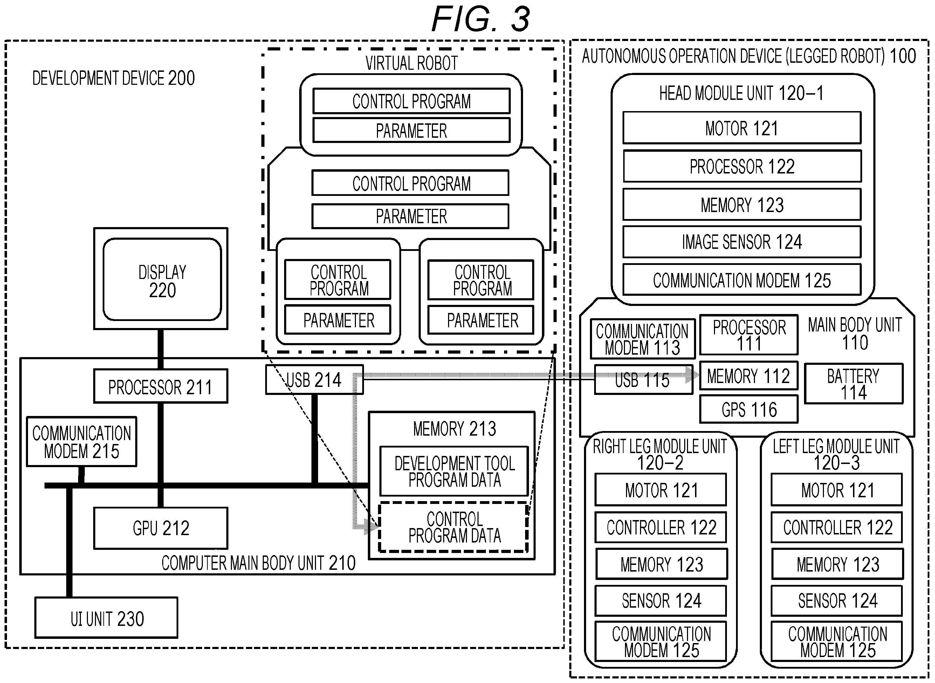

Fig. 3 illustrates a development environment of a control program in a case of developing a legged robot as a specific example of the autonomous operation device 100. Although program development is performed using a single development device in Fig. 3, it is of course possible to use a distributed development environment via a network as shown in Fig. 2.

The legged robot 100 has a main body unit 110 and a module unit 120 corresponding to a head and left and right legs. Although not shown, there are a data bus and a control bus that connect the main body unit 110 and hardware such as each module unit 120 such as a head and left and right legs.

Note that the legged robot 100 may further have a module unit (not shown) such as an upper limb. Furthermore, a modification of the actual machine configuration may be considered in which functions such as processors and memories in at least some of the module units are integrated with the main body unit and controlled by the processor of the main body unit.

The main body unit 110 includes a processor 111, a memory 112, a wireless or wired communication modem 113, a battery 114, a USB port 115, and a GPS 116.

The left and right leg module units 120-2 and 120-3 include a motor 121 for driving a joint (or walking) such as a hip joint, a knee joint, or an ankle as an actuator, and include a motor controller 122 that controls the driving of the motor as a processor. Furthermore, the left and right leg module units 120-2 and 120-3 include, as the sensor 124, a torque sensor that detects an external force generated on the output side of the motor, an encoder that detects a rotation angle on the output side of the motor, a ground sensor in the sole portion, and the like. Furthermore, the module unit 120-1 of the head includes a motor 121 for head rotation as an actuator, and an image sensor 124 for imaging the surroundings as a sensor.

As similar to Fig. 1, a control program of the main body unit and each module unit of the robot 100 described above can be created using the development tool program operating on the development device 200, and further, it is possible to check and verify the operation through the display of 3D graphics animation of a virtual machine using operation of a physics engine operating on the development tool program.

Furthermore, a control program created using the development device 200 or a control program for the entire actual machine developed in a development environment as shown in Fig. 2 (or other development environment) or a control program for each module unit is uploaded to the memory 112 of the main body unit 110 or the memory 123 of each module unit 120 by wired or wireless communication via the USB port 115 of the main body unit 110 or the communication modem 125 of each module unit 120. Then, the uploaded program operates properly at the time of activation of the robot 100 or the like.

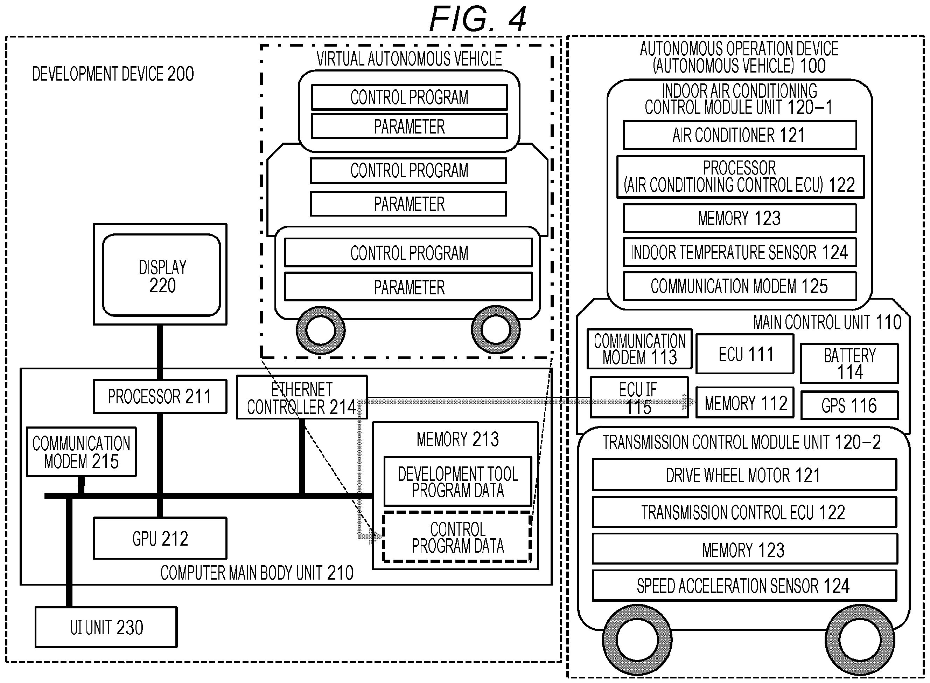

Fig. 4 illustrates a development environment of a control program in a case of developing an autonomous vehicle as another specific example of the autonomous operation device 100. An autonomous vehicle 100 is an automobile (or an unmanned driving vehicle for work or transportation, or the like) to which an autonomous driving technology is introduced, but includes, in addition to a fully automated driving vehicle, vehicles traveling in the automatic driving mode in an automobile in which the automatic driving mode and the manual driving mode can be switched. Although program development is performed using a single development device in Fig. 4, it is of course possible to use a distributed development environment via a network as shown in Fig. 2.

The autonomous vehicle 100 shown in Fig. 4 has a main control unit 110, a transmission control module unit 120-2 as a module unit, and an indoor air conditioning control module unit 120-1. Although not shown, there are a data bus and a control bus (CAN bus or the like) that connect the main control unit 110 and hardware such as each module unit 120. Furthermore, the autonomous vehicle 100 includes many module units (not shown) in addition to the transmission control module unit 120-2 and the indoor air conditioning control module unit 120-1, which are omitted for simplification of the description.

The main control unit 110 includes an electronic control unit (ECU) 111 as a processor, a memory 112, a communication modem 113, an ECU interface 115, a GPS 116, and a battery 114. The communication modem 113 is assumed to be wireless fidelity (Wi-Fi), long term evolution (LTE), near field communication, or the like. Furthermore, the ECU interface 115 is assumed to be an interface to a controller area network (CAN) bus (not shown), and is connected to the development device 200 using a communication standard such as Ethernet (registered trademark).

The indoor air conditioning module unit 120-1 includes an air conditioner 121 as an actuator, an air conditioning control ECU 122 as a processor, a memory 123, an indoor temperature sensor 124 as a sensor, and a communication modem 125 of Bluetooth (registered trademark) communication or the like. For example, it is assumed that the air conditioner is controlled by connecting to an information terminal such as a smartphone (not shown) carried by a passenger by Bluetooth (registered trademark) communication.

The transmission control module unit 120-2 includes a drive wheel motor 121 as an actuator, a transmission control ECU 122 as a processor, a memory 123, a speed acceleration sensor 124 as a sensor, a steering angle sensor, and the like.

Note that, in the configuration example shown in Fig. 4, although the ECUs are arranged in the main control unit 110 and each module unit 120, the ECU 111 in the main control unit 110 may centrally manage all the module units.

As similar to Fig. 1, a control program of the main control unit 110 of the autonomous vehicle 100, indoor air conditioning control module unit 120-1, and the transmission control module unit 120-2 described above can be created using the development tool program operating on the development device 200, and further, it is possible to check and verify the operation through the display of 3D graphics animation of a virtual machine using a function of a physics engine operating on the development tool program.

Furthermore, a control program created using the development device 200 or a control program for the entire actual machine developed in a development environment as shown in Fig. 2 (or other development environment) or a control program for each module unit is uploaded to the memory 112 of the main control unit 110 or the memory 123 of each module unit 120 by wired or wireless communication via the ECU interface 115 of the main control unit 110 or the communication modem (not shown) of each module unit 120. Then, the uploaded program operates properly at the time of activation of the autonomous vehicle 100 or the like.

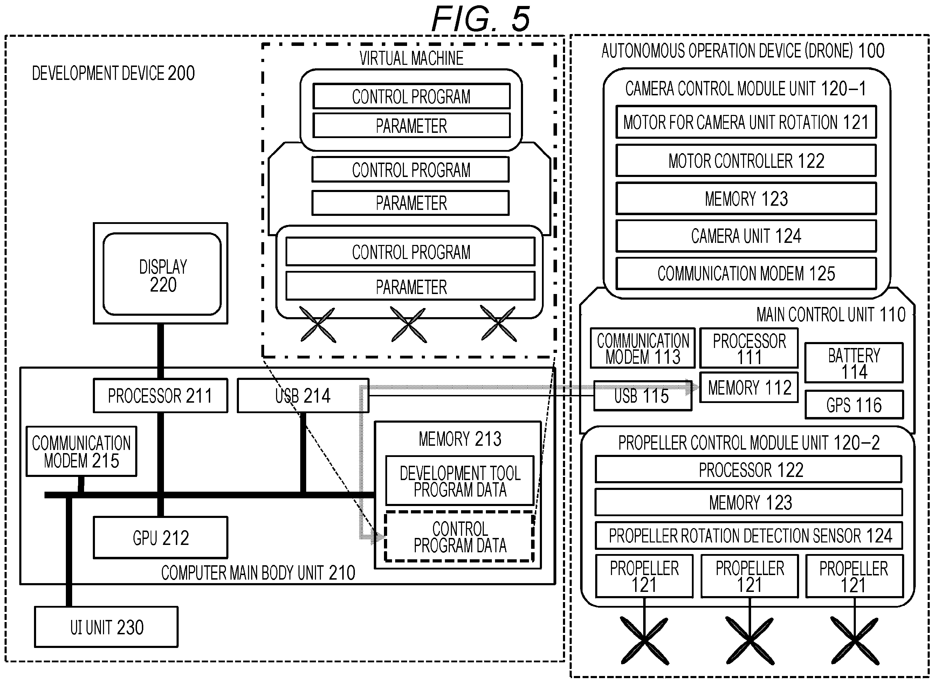

Fig. 5 illustrates a development environment of a control program in a case of developing an unmanned aerial vehicle (drone) as another specific example of the autonomous operation device 100. Although program development is performed using a single development device in Fig. 5, it is of course possible to use a distributed development environment via a network as shown in Fig. 2.

The unmanned aerial vehicle 100 shown in Fig. 5 has a main control unit 110, a camera control module unit 120-1 as a module unit, and a propeller control module unit 120-2. Although not shown, there are a data bus and a control bus that connect the main control unit 110 and hardware such as each module unit 120. Furthermore, in the wireless aircraft 100, a module unit other than the camera control module unit 120-1 and the propeller control module unit 120-2 may be incorporated.

The main control unit 110 includes a processor 111, a memory 112, a communication modem 113, a USB port 115, a GPS 116, and a battery 114. The communication modem 113 is assumed to be a wireless modem of Wi-Fi, LTE, near field communication, or the like, and communicates with a remote controller (not shown) operated by the operator. Furthermore, connection with the development device 200 is made using the USB port 115, and the developed control program is uploaded.

The camera control module unit 120-1 includes a camera unit (including an image sensor) 124 as a sensor, a camera unit rotation motor 121 as an actuator, a motor controller 122 as a processor, a memory 123, and a communication modem 125. The camera unit rotation motor may be rotatable, for example, in the range of 360 degrees in the horizontal direction, and may further be capable of tilt rotation. Furthermore, the communication modem 125 is assumed to be a wireless modem of Wi-Fi, LTE, near field communication, or the like, and performs rotation or photographing of the camera unit 124 according to a command from a remote controller or a smartphone operated by the operator.

The propeller control module unit 120-2 includes, for example, three propellers (including a rotation motor) 121 as an actuator, a processor 122 that performs control of a rotation motor of the propeller 121 or the like, a memory 123, and a propeller rotation detection sensor 124 as a sensor.

As similar to Fig. 1, a control program of the main control unit 110 of the unmanned aerial vehicle 100, the camera control module unit 120-1, and the propeller control module unit 120-2 described above can be created using the development tool program operating on the development device 200, and further, it is possible to check and verify the operation through the display of 3D graphics animation of a virtual machine using a function of a physics engine operating on the development tool program.

Furthermore, a control program created using the development device 200 or a control program for the entire actual machine developed in a development environment as shown in Fig. 2 (or other development environment) or a control program for each module unit is uploaded to the memory 112 of the main control unit 110 or the memory 123 of each module unit 120 by wired or wireless communication via the main control unit 110 or the communication modem of each module unit 120. Then, the uploaded program operates properly at the time of activation of the unmanned aerial vehicle 100 or the like.

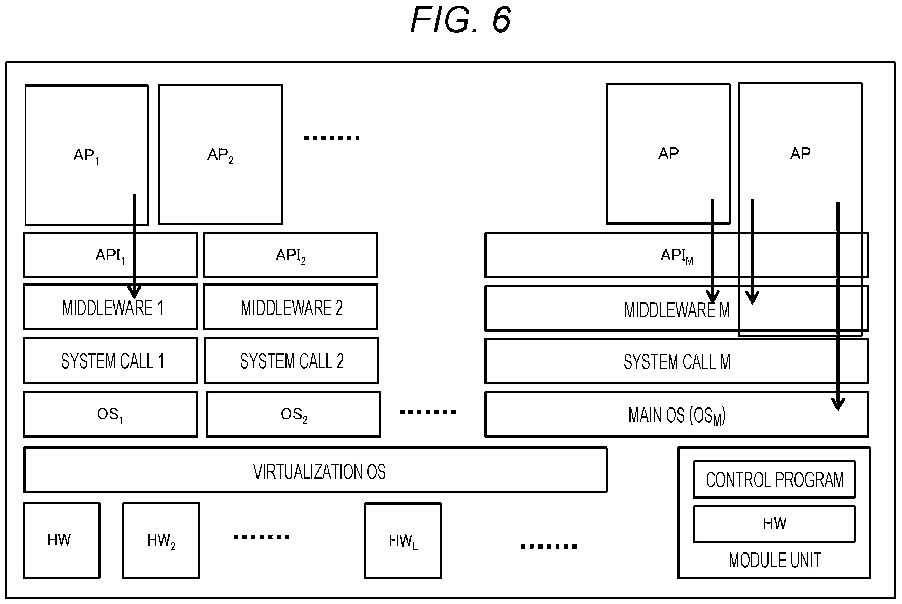

Fig. 6 is shows an example of the configuration of the hardware and software architecture mounted on an actual machine of an autonomous operation device 100.

As shown in Fig. 1 or the like, in the actual machine, a plurality of hardware modules (HW₁, HW₂, ...) of the main body unit (or main control unit), the plurality of module units, and the like is incorporated in a housing. Furthermore, there may be an actual machine configured by distributing and arranging hardware modules in two or more housings.

The OS directly controls these hardware modules (HW₁, HW₂, ...). Furthermore, there is a case where the control program uploaded to the memory in the module unit instead of the OS directly controls the hardware module (specifically, the processor executes the control program and controls the driving of the actuator).

As shown in Fig. 1 or the like, in the autonomous operation device 100 in which a hardware architecture is configured by the main body unit 110 and the plurality of module units 120, the main OS that controls the entire the system 100 operates in (the processor 111 of) the main body unit 110 to control the control program being executed in each module unit 120 directly or indirectly.

Fig. 6 shows an example in which a plurality of OSs (for example, OS₁, OS₂, ...) operates in addition to the main OS, and each OS provides an execution environment of an application program. In Fig. 6, for example, in a case where it is desired to drive a hardware module under the management of the main OS by the OS₁, the control program of the desired module unit can be indirectly controlled by the OS₁ communicating with the main OS. Furthermore, communication between the OS₁ and the main OS can be realized using a technology such as remote procedure call (RPC).

Fig. 6 also shows an architecture built using virtualization technology. In other words, a plurality of different operating systems (for example, OS₁, OS₂, ...) is operated on the virtualization OS. Application programs (for example, AP₁ developed for OS₁ and AP₂ developed for OS₂) developed on the assumption of different OSs can be mixed on the same actual machine.

For example, when application programs developed in an autonomous vehicle is roughly classified into two kinds of an application program requiring high reliability such as a drive system control (DSU or the like), and an application program having high versatility such as infotainment related to a service for a user (audio equipment, air conditioning, or the like), the former AP₁ is developed assuming a more reliable OS₁, and the latter AP₂ is developed assuming a OS₂ that has higher versatility and is developable by many developers. Since the driving system control application program AP₁ and the infotainment application program AP₂ developed on the assumption of different OSs as described above can easily control the hardware corresponding to each of them by the intervention of the virtualization OS, the application programs can be mixed on the same autonomous vehicle.

An application program developer can develop an application program using an API provided by a system (for example, middleware). For example, as the API, use of functions such as "map display", "switch to voice dialogue mode", "recognition of surrounding person" may be considered.

Furthermore, the application program developer can develop an application program including a program that instructs the OS using a system call. The system call mentioned here is an interface for utilizing functions related to system control. Examples of the system call may include changing parameters of the processor (for example, motor controller) in the module unit, and setting a network address in the communication modem.

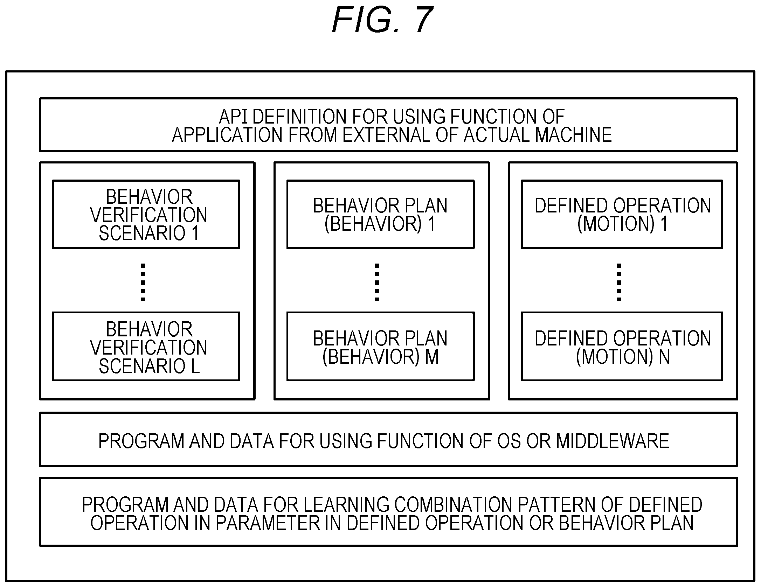

Fig. 7 schematically shows a configuration example of an application program. The application program is developed, for example, on the development device 200 in Fig. 1 (in other words, using the development tool program). As shown in the drawing, although the application program is configured by a plurality of components, all the components may be integrated and configured into one file, but each component may be configured as a separate file. Furthermore, these files are stored in shared storage on the cloud server in Fig. 2, storage dedicated to each user (in other words, main body unit developer storage, module unit developer storage), storage provided in a dedicated server, or the like, and may be capable of being shared by an administrator, a developer, a customer, or a user who has an access right to storage such as a server.

The application program includes one or more defined operations, one or more behavior plans, and one or more behavior verification scenarios. The defined operation and the behavior plan are both operation control programs of the autonomous operation device 100.

The defined operation includes target values issued in instruction to a controller of an actuator represented by a motor or the like among hardware, and is also referred to as "motion". There is a case where one defined operation includes only a target value issued in instruction to the controller at a certain point in time, or a series of target values issued in instruction to the controller in time series in a certain section. Furthermore, the defined operation is also a program and data for instructing the controller to set basic parameters. Examples of parameters include P (proportional control), I (integral control), and D (derivative control). Furthermore, parameters that can be set in the controller (processor) according to the characteristics of the actuator to be controlled, such as a motor, can be set as a basic parameter in the defined operation.

An behavior plan includes programs and data that invoke the function of one or more defined operations. The autonomous operation device 100 such as a robot realizes one "behavior" by performing one or more defined operations invoked according to the behavior plan.

Furthermore, the behavior plan is a program and data describing a series of operations of the autonomous operation device 100 by determining defined operation to be activated for each situation. For example, a behavior plan can be mentioned which describes conditional branches for selecting defined operation in the form of a tree structure. Since the behavior plan controls the autonomous operation device 100 according to the recognition result, the behavior plan can be positioned in the behavior control program based on the environment (situation) recognition. In this sense, the behavior plan also corresponds to a part of the functions of artificial intelligence (AI) in a broad sense.

The behavior verification scenario is a program that realizes verification (or evaluation or monitoring) as to whether a predetermined defined operation in the behavior plan is executed under a predetermined condition. The predetermined condition is defined with respect to environmental data such as data stored in a memory in each module unit (internal state), and data detected by a sensor in each module unit (external environment). The behavior verification scenario can detect as an abnormality that the defined operation as expected does not activate when a predetermined condition occurs in a certain behavior plan with the autonomous operation device 100.

The application program can also include programs and data for utilizing the functions of the OS or middleware. Furthermore, the application program can also include programs and data for causing programs and data of the behavior plan or defined operation to be changed by learning during actual machine operation. The application program further defines an API for externally using a function of the application program of the actual machine of the autonomous operation device 100. Therefore, the development device 200 used to create the application program, and the external device such as a user terminal or server can use the function of the application program by invoking the API via communication while the actual machine is operating or testing.

For example, in a case where an autonomous vehicle is the autonomous operation device 100, it is assumed that "brake actuation" is defined as the defined operation and "safe driving" is defined as the behavior verification scenario. The behavior verification scenario "safe driving" is for verifying (or evaluating or monitoring) that, for example, the defined operation "brake actuation" occurs under the condition "recognition of a person ahead" as an external environment, while executing a behavior plan in an autonomous vehicle. Under the condition of "recognition of a person ahead", when the defined operation "brake actuation" does not occur in the autonomous vehicle, the behavior verification scenario detects that an abnormality of the autonomous vehicle (or on the behavior plan) has occurred.

Furthermore, the behavior verification scenario includes a function of recording environment data such as data stored in the main body unit of the autonomous operation device 100 or the memory in each module unit (internal state), or data detected by the sensor in each module unit (external environment) in a case where predetermined event such as abnormality is detected, in association with the behavior verification scenario. The "safe driving verification" API is defined as one of the APIs for using the function of the application program from outside, and the environmental data recorded in association with the behavior verification scenario "safe driving" before and after the accident of the autonomous vehicle is made so as to be extracted.

Using such an API, the environmental data recorded in association with the behavior verification scenario when an abnormality occurs can be extracted to the outside. Then, using the 3D graphics animation function in cooperation with the physics engine of the development tool program operating on the development device 200, the operation of the autonomous operation apparatus 100 at the time of occurrence of abnormality based on the taken out environment data can be reproduced by 3D graphics animation of the virtual machine. Furthermore, the environment data at the time of occurrence of abnormality is uploaded to the autonomous operation device 100 in which the abnormality has occurred or an actual machine of the same type to operate the application program, so that the actual machine operation at the time of occurrence of the abnormality can be reproduced.

The application program for the autonomous operation device 100 can be created by a developer of the application program on the development device 200 using the development tool program. The development tool program has a compiler, a debugger, a 3D graphics animation function, and the like linked with a physics engine, and a developer of an application program can issue an instruction on execution of these functions on a GUI screen.

Furthermore, in the present embodiment, it is assumed that a development tool program operating on the development device 200 includes a function called a physics engine. The physics engine is a function of reproducing a phenomenon based on the physical law of the operation of the real autonomous operation device 100 on the computer, and considers the physical characteristics of the autonomous operation device 100 and further the realistic external environment to generate 3D graphics animation of the virtual machine representing operation similar to real actual machine and display the result. The developer of the application program can verify the operation of the actual machine while watching such 3D graphics animation and further correct the application program appropriately.

The development tool program prepares program modules and data to reproduce the actual operation of the actuator and processor of each module unit of the autonomous operation device 100. The same API or function as the OS operating on the actual machine (see Fig. 6) is used as the API or function for issuing an instruction to the program module for realizing the physics engine function, so that the program created by the development tool program can be operated as it is on the OS on the actual machine.

Recently, the accuracy of the physics engine has been improved, and the application program for controlling the actual machine operation of the autonomous operation device 100 is operated on the development tool program having the physics engine and the function of 3D graphics animation, so that it has become possible to more accurately reproduce actual machine operation with virtual machines. In particular, since a physics engine that performs high-performance physical operation has a function corresponding to the hardware of an actual machine (for example, a motor controller), the control program can be verified without using an actual machine, so that development efficiency is improved and development costs is reduced. Furthermore, when the application program including the control program created in this way is operated on the actual machine, the expected operation can be reproduced on the actual machine.

For example, using a development tool program with a physics engine and a 3D graphics animation function, whether the defined operation (described above) including time-series target values for the controller of each module unit operates correctly even in a real environment can be evaluated or verified without executing the defined operation on an actual machine.

On the other hand, with regard to a behavior plan partially corresponding to the function of AI in a broad sense, evaluation and verification are not as easy as defined operation. For example, the following evaluation and verification methods may be mentioned.

(1) The behavior plan to be evaluated is operated on the actual machine or on the development tool program with the physics engine and the 3D graphics animation function, and action on the evaluator of the actual machine, or action on operation of the evaluator on the same development tool program is visually checked.
(2) The behavior plan (evaluator behavior plan) that serves as a substitute for the evaluator is separately created, and action by the behavior plan of the evaluation target on the evaluator behavior plan is checked visually by the evaluator or by debug output of the evaluator behavior plan.

Both of the above evaluation methods (1) and (2) have the following problems.

(a) Evaluation takes a long time.
(b) Reproducibility of verification results is low due to the influence of random numbers, peripheral environment, and variation in the operation of the evaluator.
(c) Since the outputs of the sensor and the recognizer in each module unit are used as environmental data to be input to the behavior plan control software, it is only integrated verification, and it is hard to say that it is direct evaluation to the logic of the behavior plan.

Therefore, in the following, in a development environment of an application program using a development tool program having a physics engine and a 3D graphics animation function, a highly reproducible and efficient verification method of a behavior plan is proposed. This verification method is a method for preparing a behavior verification scenario that defines the order of desirable (or ideal) defined operation, driving the behavior plan to be evaluated under a predetermined environment, and performing evaluation and verification of the behavior plan on the basis of whether the defined operation is selected in the order of the behavior verification scenario.

The software that performs evaluation and verification of the behavior plan with reference to the behavior verification scenario is hereinafter referred to as "behavior verification software". The behavior verification software has three operation modes of a "single operation mode" for driving the behavior plan to be evaluated by the behavior verification software itself to perform evaluation and verification of the behavior plan with the software alone, a "simulation mode" of driving the behavior plan by the development tool program having a physics engine and a 3D graphics animation function and monitoring the defined operation activated according to the virtual environment to perform evaluation and verification of the behavior plan, and an "actual machine operation mode" of driving the behavior plan on an actual machine (autonomous operation device 100) and monitoring the defined operation activated according to the real environment to perform evaluation and verification of the behavior plan.

According to the "single operation mode" or the "simulation mode", evaluation and verification of the behavior plan can be performed with high reproducibility in a program (behavior plan) development environment. Furthermore, according to the "actual machine operation mode", evaluation and verification of the behavior plan can be performed in real time.

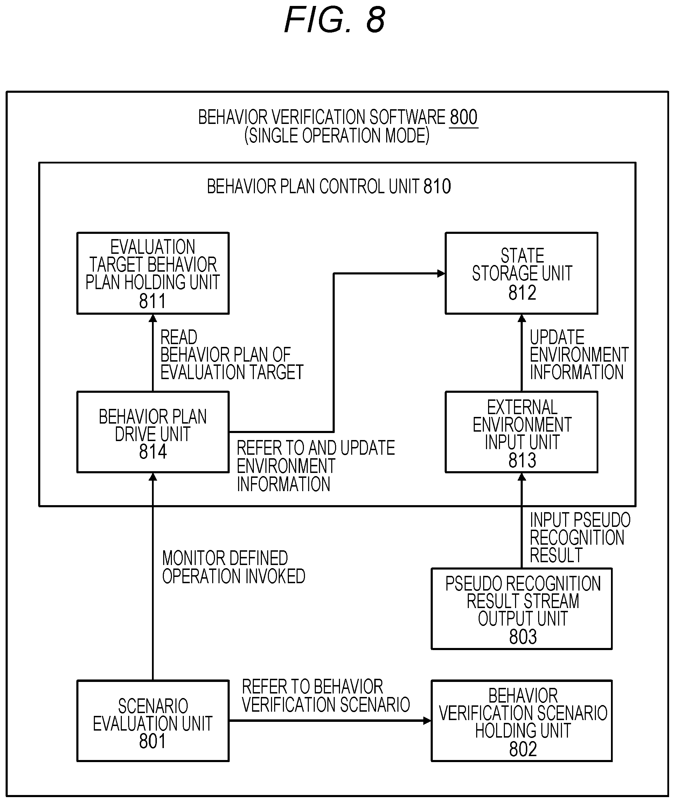

Fig. 8 shows a configuration example of a software module for evaluating and verifying the behavior plan in the single operation mode. The behavior verification software 800 is executed by the development device 200 or the like. The behavior verification software 800 in the single operation mode includes a scenario evaluation unit 801, a behavior verification scenario holding unit 802, a pseudo recognition result stream output unit 803, and a behavior plan control unit 810 as software modules. The illustrated behavior verification software 800 is configured to evaluate and verify the behavior plan driven by the behavior plan control unit 810 in the software 800.

The behavior plan control unit 810 includes an evaluation target behavior plan holding unit 811, a state storage unit 812, an external environment input unit 813, and a behavior plan drive unit 814.

The evaluation target behavior plan holding unit 811 holds program and data of one or more behavior plans to be evaluated in the behavior verification software 800. The behavior plan is a program and data for describing defined operation to be activated according to the state of the application program (internal state) and the external environment. In the following, a behavior plan is assumed in which conditional branches for selecting defined operation are described in the form of a tree structure.

The state storage unit 812 stores the recognition result of the external environment and the state of the application program (behavior plan driven by the behavior plan drive unit 814), that is, the internal state.

The external environment input unit 813 receives data of the external environment from the outside of the behavior plan control unit 810, and writes (updates) the state storage unit 812. The external environment originally refers to environmental data around the actual machine (autonomous operation device 100). However, in the single operation mode, the external environment is an aggregation of ideal time series of external environment data in which it is assumed that defined operation according to the behavior verification scenario is selected in the order from the behavior plan to be evaluated.

The behavior plan drive unit 814 reads the program and data of the behavior plan to be evaluated from the evaluation target behavior plan holding unit 811, and refers to the information regarding the current internal state and external environment from the state storage unit 812 to select the defined operation to be displayed according to the internal state or the external environment. Furthermore, the behavior plan drive unit 814 writes the state of the application program updated according to the selected defined operation in the state storage unit 812.

The behavior verification scenario holding unit 802 holds a behavior verification scenario for each behavior plan. The behavior verification scenario is a program and data defining the order of desirable (or ideal) defined operation to be selected from the behavior plan according to changes in the expected external environment. The behavior verification scenario is, for example, the order of defined operation that the developer of the behavior plan program considers to be ideal with respect to changes in the assumed external environment.

The pseudo recognition result stream output unit 803 stream outputs pseudo recognition result data of the external environment to the external environment input unit 813 in the behavior plan control unit 810. The external environment is environment data around the actual machine (the autonomous operation device 100), and is data that is originally recognized on the basis of the detection result of the sensor in each module unit. However, in the single operation mode, a pseudo recognition result stream including a time series data aggregation of recognition results of the ideal external environment in which it is assumed that defined operation according to the behavior verification scenario is selected in the order from the behavior plan to be evaluated. For example, a pseudo recognition result stream is defined simultaneously with the behavior verification scenario. Then, the pseudo recognition result stream output unit 803 outputs, to the external environment input unit 813, the pseudo recognition result stream defined together with the behavior verification scenario for the behavior plan to be evaluated.

The scenario evaluation unit 801 reads a behavior verification scenario corresponding to the behavior plan currently being evaluated, from the behavior verification scenario holding unit 802. Then, the scenario evaluation unit 801 evaluates or verifies the behavior plan to be evaluated on the basis of result of comparing the defined operation sequentially selected by the behavior plan drive unit 814 according to the pseudo recognition result stream with the order of the defined operation defined in the behavior verification scenario.

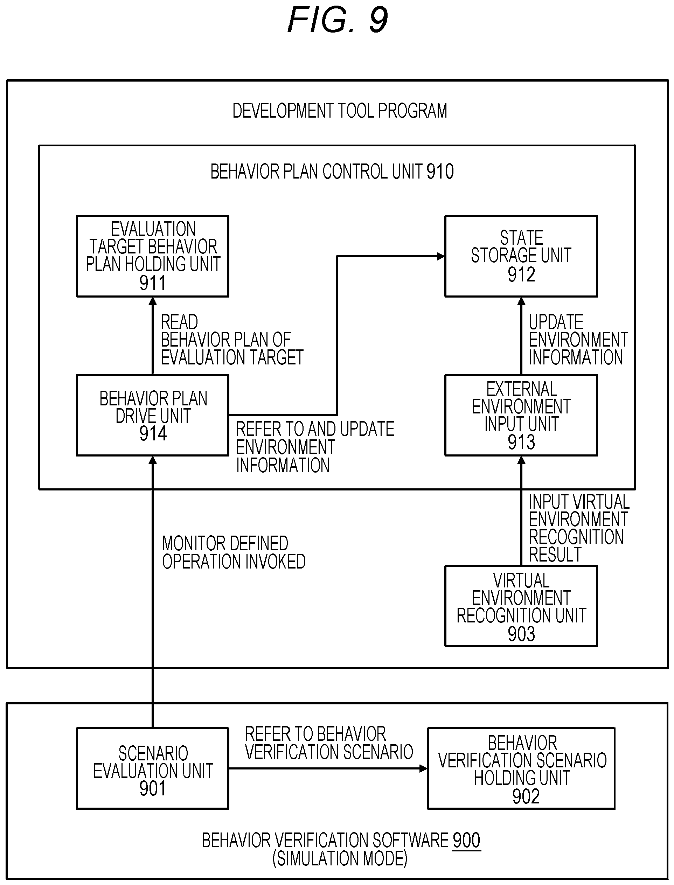

Fig. 9 shows a configuration example of a software module for evaluating and verifying the behavior plan in the simulation mode. The behavior verification software 900 in the simulation mode includes a scenario evaluation unit 901 and a behavior verification scenario holding unit 902, and is configured to evaluate or verify the behavior plan virtually driven in a development tool program having a physics engine and a 3D graphics animation function.

The behavior plan control unit 910 and the virtual environment recognition unit 903 for controlling driving of the behavior plan are disposed in the development tool program having the physics engine and the 3D graphics animation function. The behavior plan control unit 910 includes an evaluation target behavior plan holding unit 911, a state storage unit 912, an external environment input unit 913, and a behavior plan drive unit 914.

The evaluation target behavior plan holding unit 911 holds program and data of one or more behavior plans to be evaluated in the behavior verification software 900.

The state storage unit 912 stores the recognition result of the (virtual) external environment and the state of the application program (behavior plan driven by the behavior plan drive unit 914), that is, the internal state.

The external environment input unit 913 receives data of the external environment from the outside of the behavior plan control unit 910, and writes (updates) the state storage unit 912. The external environment originally refers to environmental data around the actual machine (autonomous operation device 100). However, in the simulation mode, the external environment is a aggregation of time series of recognition results of a virtual external environment in the development tool program having the physics engine and the 3D graphics animation function. The virtual environment recognition unit 903 recognizes the virtual environment in the development tool program, and outputs the recognition result to the external environment input unit 913.

The behavior plan drive unit 914 reads the program and data of the behavior plan to be evaluated (or to be simulated) from the evaluation target behavior plan holding unit 911, and refers to the information regarding the current internal state and external environment from the state storage unit 912 to select the defined operation to be displayed according to the internal state or the external environment. Furthermore, the behavior plan drive unit 914 writes the state of the application program updated according to the selected defined operation in the state storage unit 912.

The behavior verification scenario holding unit 902 holds a behavior verification scenario for each behavior plan. The behavior verification scenario is a program and data defining the order of desirable (or ideal) defined operation to be selected from the behavior plan according to changes in the expected external environment. The behavior verification scenario is, for example, the order of defined operation that the developer of the behavior plan program considers to be ideal with respect to changes in the assumed external environment.

The scenario evaluation unit 901 reads a behavior verification scenario corresponding to the behavior plan currently being evaluated, from the behavior verification scenario holding unit 902. Then, the scenario evaluation unit 901 evaluates or verifies the behavior plan to be evaluated on the basis of result of comparing the defined operation sequentially selected by the behavior plan drive unit 914 according to the virtual environment with the order of the defined operation defined in the behavior verification scenario.

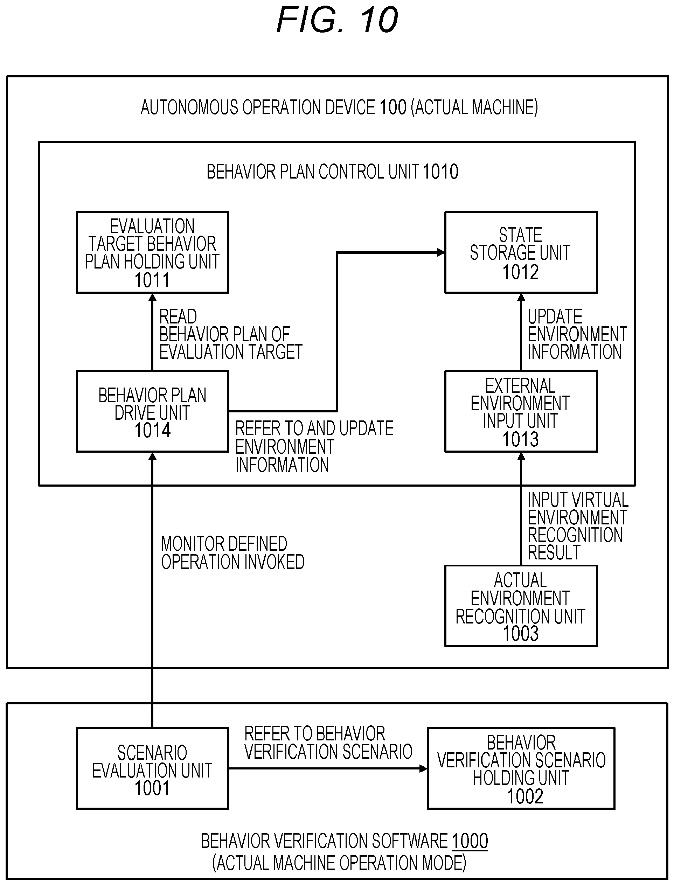

Fig. 10 shows a configuration example of a software module for evaluating and verifying the behavior plan in the actual machine operation mode. The behavior verification software 1000 in the actual machine operation mode includes a scenario evaluation unit 1001 and a behavior verification scenario holding unit 1002, drives the behavior plan on the actual machine (the autonomous operation device 100), and monitors the defined operation to be activated according to the real environment to evaluate and verify the behavior plan.

The behavior plan control unit 1010 and the real environment recognition unit 1003 are arranged in the actual machine hardware (the autonomous operation device 100). The behavior plan control unit 1010 is specifically behavior plan control software that executes a behavior plan on the processor of the main body unit, but includes an evaluation target behavior plan holding unit 1011, a state storage unit 1012, an external environment input unit 1013, and a behavior plan drive unit 1014. Furthermore, the real environment recognition unit 1003 corresponds to a sensor and a processor arranged in each module unit, and recognizes the external environment of the actual machine 100 on the basis of a detection signal by the sensor.

The evaluation target behavior plan holding unit 1011 holds program and data of one or more behavior plans to be evaluated in the behavior verification software 1000.

The state storage unit 1012 stores the recognition result of the external environment and the state of the application program (behavior plan driven by the behavior plan drive unit 1014), that is, the internal state.

The external environment input unit 1013 receives data of the external environment of the actual machine 100 from the outside of the behavior plan control unit 1010, and writes (updates) the state storage unit 1012. The external environment is real environment data around the actual machine (the autonomous operation device 100), and is input from the real environment recognition unit 1003.

The behavior plan drive unit 1014 reads the program and data of the behavior plan to be evaluated from the behavior plan holding unit 1011, and refers to the information regarding the current internal state and external environment from the state storage unit 1012 to select the defined operation to be displayed according to the internal state or the external environment. Furthermore, the behavior plan drive unit 1014 writes the state of the application program updated according to the selected defined operation in the state storage unit 1012.

The behavior verification scenario holding unit 1002 holds a behavior verification scenario for each behavior plan. The behavior verification scenario is a program and data defining the order of desirable (or ideal) defined operation to be selected from the behavior plan according to changes in the expected external environment. The behavior verification scenario is, for example, the order of defined operation that the developer of the behavior plan program considers to be ideal with respect to changes in the assumed external environment.

The scenario evaluation unit 1001 reads a behavior verification scenario corresponding to the behavior plan currently being evaluated, from the behavior verification scenario holding unit 1002. Then, the scenario evaluation unit 1001 evaluates or verifies the behavior plan to be evaluated on the basis of result of comparing the defined operation sequentially selected by the behavior plan drive unit 1014 according to the real environment of the actual machine with the order of the defined operation defined in the behavior verification scenario.

In each of the single operation mode, simulation mode, and actual machine operation mode, although each software module constituting the behavior plan control unit itself is substantially the same, the input sources of the execution environment and the external environment operating in each mode are different. By properly defining the interface of the external environment input unit, the behavior plan control unit can operate in various environments with substantially the same software module configuration.

In the single operation mode, the pseudo recognition result stream which is the recognition result of the ideal external environment is input to the external environment input unit 813, so that the behavior plan control unit 810 can evaluate or verify the behavior plan to be evaluated without irrespective of the performance of the real environment recognition unit of the actual machine with high reproducibility.

On the other hand, the behavior plan control units 910 and 1010 having the same configuration operate in each of the simulation mode and the actual machine operation mode, so that the behavior plan can be evaluated by the behavior verification scenario of the same format also in the integration evaluation (integration test).

In any operation mode, the scenario evaluation unit 801 (901, 1001) compares whether the order of the defined operation selected when the behavior plan is executed is the same as the order defined in the behavior verification scenario. Then, in a case where it is determined that the order of the defined operation is not the same as a result of the comparison, an abnormality of the behavior plan to be evaluated is detected.

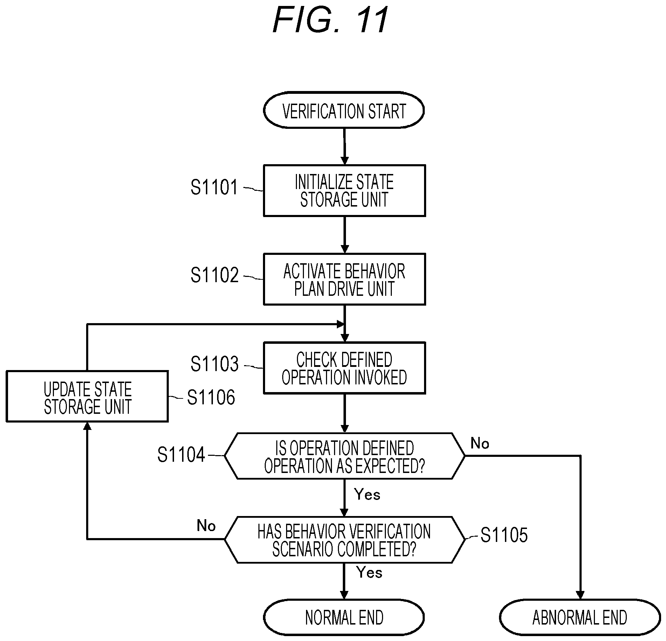

Fig. 11 shows a processing procedure for evaluating and verifying a behavior plan in a flowchart form. Although the following description will be made as the processing procedure executed by the behavior verification software 800 in the single operation mode, it should be understood that a similar processing procedure is applied to the simulation mode and the actual machine operation mode.

First, as initialization processing of the state storage unit 812, preconditions for verification of the behavior plan to be evaluated are written in the state storage unit 812 (step S1101). The preconditions for verification are assumed in the behavior verification scenario, and are defined simultaneously with the definition of the behavior verification scenario.

Next, the behavior plan drive unit 814 is activated (step S1102). The behavior plan drive unit 814 reads the behavior plan to be evaluated in the current behavior verification from the evaluation target behavior plan holding unit 811 and starts the behavior plan operation.

Then, the scenario evaluation unit 801 checks the defined operation to be sequentially invoked by the behavior plan drive unit 814 (step S1103).

In step S1102, the behavior plan whose operation has been started in the behavior plan drive unit 814 reads the external environment and the state of the application program (internal state) stored in the state storage unit 812 for each predetermined control cycle, for example, and selects and invokes defined operation that meets the conditions of the external environment and internal state. Then, in step S1103, when the scenario evaluation unit 801 invokes the behavior verification scenario corresponding to the behavior plan to be evaluated from the behavior verification scenario holding unit 802, the scenario evaluation unit 801 checks whether the defined operation selected by the behavior plan is the expected defined operation in the order defined in the behavior verification scenario.

Here, in a case where the defined operation selected by the behavior plan is not the expected defined operation in the order defined in the behavior verification scenario (No in step S1104), an abnormality of the behavior plan to be evaluated is detected, and this processing is abnormally ended. In a case of abnormal termination, with behavior verification software or a development tool program with a physics engine and a 3D graphics animation function, a notification about abnormal termination can be made, such as displaying a dialog box on the GUI. Furthermore, in a case of the actual machine operation mode, for example, the driver for the speaker exemplified by the reference numeral 121 in Fig. 1 may be driven to notify the user by voice, or notify the user's portable terminal (smartphone or the like) using the communication modem 125.

On the other hand, in a case where the defined operation selected by the behavior plan in the current control cycle is the expected defined operation in the order defined in the behavior verification scenario (Yes in step S1104), whether the evaluation and verification for all the defined operation of which order is defined by the behavior verification scenario has completed (step S1105).

In a case where the behavior verification scenario is not yet completed (No in step S1105), the pseudo recognition result input to the external environment input unit 813 and the current application program state (internal state) are written, and the state stored in the state storage unit 812 is updated (step S1106). Thereafter, the process returns to step S1103 and the check for the defined operation to be invoked next by the behavior plan using the behavior verification scenario is repeatedly performed.

After that, similar processing to that described above is repeated until the end of the behavior verification scenario is reached. Then, in a case where the end of the behavior verification scenario can be reached without detecting any abnormality (Yes in step S1105), it is concluded that the behavior plan to be evaluated is normal, and this processing is normally ended.

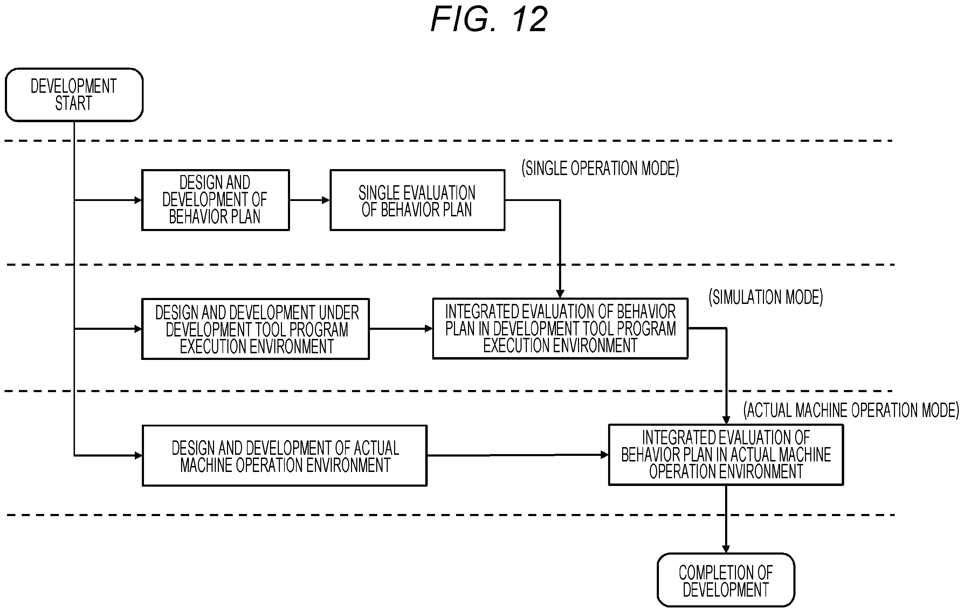

Fig. 12 shows an example of a development workflow of the behavior plan including evaluation and verification of the above-described behavior plan.

The developer uses, for example, a development tool program operating on the development device 200 to design and develop the behavior plan of the autonomous operation device 100 such as a robot. In the past, evaluations and verifications have been carried out by subjecting a designed and developed behavior plan to a simulator or driving an actual machine, but it has been difficult to evaluate the behavior plan alone. On the other hand, in the present embodiment, it is possible to evaluate and verify a single behavior plan using the single operation mode of the behavior verification software as shown in Fig. 8.

Next, design and development of the behavior plan of the autonomous operation device 100 are performed in the development tool program execution environment using a physics engine function or the like. Then, using the simulation mode of the behavior verification software as shown in Fig. 9, integrated evaluation of the behavior plan in the development tool program execution environment is performed.

Moreover, the actual machine of the autonomous operation device 100 is connected to the development device 200, and design and development of the behavior plan of the autonomous operation device 100 are performed under the actual machine operation environment. Then, using the actual machine operation mode of the behavior verification software as shown in Fig. 10, integrated evaluation of the behavior plan in the actual machine environment is performed.

The development schedule of the behavior plan is influenced by the development speed of the development tool program execution environment as well as the integrated evaluation environment in the actual machine environment. According to the present embodiment, by using the single operation mode of the behavior verification software, it becomes possible to perform the single evaluation of the behavior plan, so that it can be expected to realize parallel development relatively independent from other modules.

In general software development, the programmer who is in charge of program development creates the verification code that is used for evaluation and verification of the program. On the other hand, in the present embodiment, it is assumed that designers other than programmers who are in charge of design and development of the behavior plan also create the behavior verification scenario.

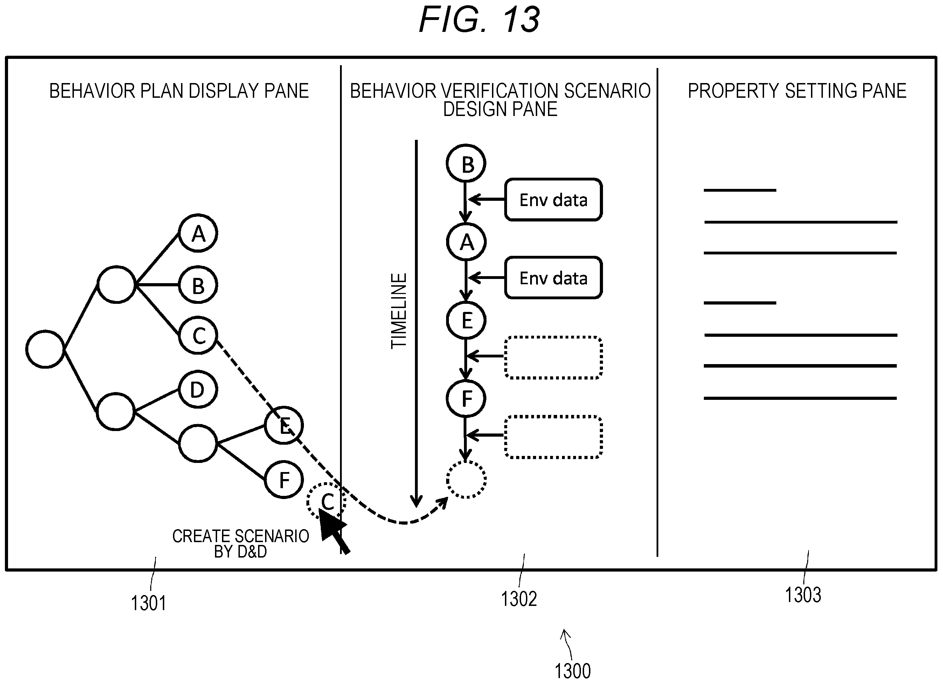

Fig. 13 schematically shows a configuration example of a GUI tool 1300 applied to creation of a behavior verification scenario. The illustrated GUI tool 1300 includes a behavior plan display pane 1301 for displaying the behavior plan to be evaluated, a behavior verification scenario design pane 1302 used for designing the behavior verification scenario used for evaluation and verification of the behavior plan, and a property setting pane 1303 for setting properties related to the behavior verification scenario.

Of course, the GUI tool 1300 may display panes other than the illustrated panes 1301 to 1303, and may display GUI parts such as tools and buttons used for design work of behavior verification scenario, but illustration is omitted for the simplification of the drawing.

In the present embodiment, a behavior plan expressed in the form of a tree structure is assumed. Therefore, in the behavior plan display pane 1301, a tree expressing the behavior plan to be evaluated is displayed. Each of nodes A, B, C,... at the end of the tree corresponds to defined operation. Furthermore, the nodes other than the end are all conditional nodes, and one of the branches is selected according to the currently observed external environment and internal state. For example, when the defined operation is completed, when an event such as observation of a change in the external environment occurs, or for every predetermined control cycle, the autonomous operation device 100 driving the behavior plan starts searching the tree from the root of the tree, and selects the defined operation corresponding to the terminal node that matches the currently observed external environment and internal state.

The behavior verification scenario indicates the order of desirable (or ideal) defined operation defined for the behavior plan to be evaluated. In the behavior verification scenario design pane 1302, by arranging a plurality of nodes B, A, E, F,... each corresponding to defined operation in the timeline direction, behavior verification scenario including defined operation in the order of the timeline direction can be designed. For example, the designer can design the behavior verification scenario by simple and intuitive work of dragging and dropping an end node corresponding to the desired defined operation from the tree displayed in the behavior view display pane 1301 into the behavior verification scenario design pane 1302. Furthermore, a condition (Env data) such as external environment at the time of transition from one defined operation to the next defined operation can be defined in the form of describing on the joint connecting corresponding nodes in the behavior verification scenario design pane 1302.

The property setting pane 1303 displays setting values of the behavior verification scenario in general, and information of the object being focused. For example, when a node of the defined operation or an object of a transition condition (Env data) between nodes is selected in the behavior verification scenario setting pane 1302, detailed information regarding the property of the object is displayed in the property setting pane 1303 and can be edited.

In designing of the behavior plan, methods of constructing state machines, trees, or the like are often used, and tasks can be shared by visual programming tools. The GUI tool 1300 shown in Fig. 13 is extended to the creation of the behavior verification scenario which is the behavior plan evaluation and verification program. By using the GUI tool 1300, the designer and developer of the behavior plan can perform a series of tasks from specification, to implementation and evaluation of the behavior plan.

Although the main evaluation item of the behavior verification scenario is the execution order of the defined operation, other evaluations can be incorporated into the behavior verification scenario. For example, it is conceivable to evaluate the following items in parallel with the execution order of the defined operation.

(A) Whether the state stored in the state storage unit 812 is as expected when the selected defined operation is executed?
(B) Does verification end within the expected time?
(C) Has defined operation other than the specified one been selected as expected?

The scenario has a function of recording information at the time of detecting a predetermined event in association with the scenario (described above). Therefore, the behavior verification scenario is only required to record evaluation items such as the above (A) to (C) in association with the behavior verification scenario using such a function. Furthermore, if an API for extracting data recorded by the behavior verification scenario to the outside is defined, the scenario evaluation unit 801 (or 901, 1001) can invoke this API to perform evaluation and verification for various evaluation items other than the order of the defined operation.

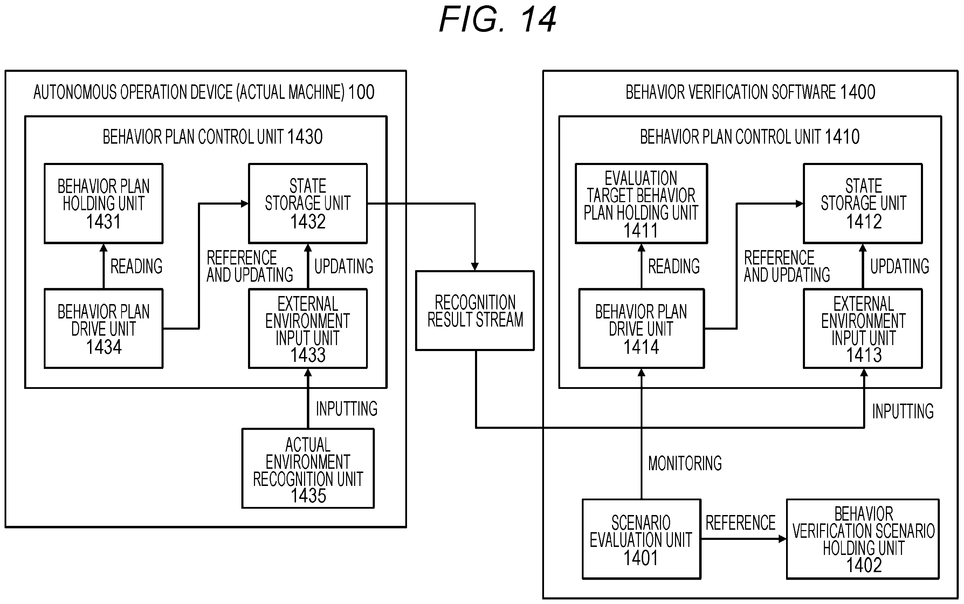

Fig. 14 shows a system configuration according to an application example of evaluation and verification method of the behavior plan as described above. The illustrated system has a configuration in which an external environment and an internal state observed when driving a developed behavior plan on the actual machine 100 is extracted as recognition stream data, and is input to the behavior verification software 1400 that operates in the single operation mode in the development device 200, and the environment on the actual machine is reproduced by software. The recognition result stream is transmitted by wireless or wired communication in a network environment as shown in Fig. 2, for example. The communication network may be configured by any of P2P type, LAN, WAN, or the Internet.

The behavior plan control unit 1430 and the real environment recognition unit 1435 are arranged in the actual machine hardware (the autonomous operation device 100). The behavior plan control unit 1430 is specifically behavior plan control software that executes a behavior plan on the processor of the main body unit, but includes a behavior plan holding unit 1431, a state storage unit 1432, an external environment input unit 1433, and a behavior plan drive unit 1434.

The behavior plan holding unit 1431 corresponds to the memory 112 of the main body unit 110 or the memory 123 in each module unit 120, and holds programs and data of one or more developed behavior plans.

The real environment recognition unit 1435 corresponds to a sensor 124 and a processor 122 arranged in each module unit 120, and the processor 122 recognizes the external environment of the actual machine 100 on the basis of a detection signal by the sensor 124. The external environment input unit 1433 receives data of the external environment of the actual machine 100 from the real environment recognition unit 1435, and writes (updates) the state storage unit 1432.

The external environment input unit 1433 receives data of the external environment from the real environment recognition unit 1435, and writes (updates) the state storage unit 1432.

The behavior plan drive unit 1434 reads the program and data of the behavior plan to be driven in the actual machine 100 from the behavior plan holding unit 1431, and refers to the information regarding the current internal state and external environment from the state storage unit 1432 to select the defined operation to be displayed according to the internal state or the external environment. Furthermore, the behavior plan drive unit 1434 writes the state of the application program updated according to the selected defined operation in the state storage unit 1432.

Here, in a case where the behavior plan does not move as expected on the actual machine 100 (in a case where a problem of the behavior plan occurs under the user environment), the internal state and the external environment stored in the state storage unit 1432 are extracted as a recognition result stream. Extraction of the recognition result stream from the state storage unit 1432 can be performed using an API defined to extract data recorded by the behavior verification scenario to the outside. The "recognition result stream" referred to here is data of the same quality as the "pseudo recognition result stream" in the single operation mode (see Fig. 8), and is data that can be used as it is as input data to the behavior verification software.

Then, on the development device 200, the recognition result stream extracted from the state storage unit 1432 on the actual machine 100 is input to the behavior verification software 1400 that operates in the single operation mode, and the environment on the actual machine is reproduced by software.

The behavior verification software 1400 is configured to evaluate and verify the behavior plan driven by the behavior plan control unit 1410 in the software 1400. The behavior plan control unit 1410 includes an evaluation target behavior plan holding unit 1411, a state storage unit 1412, an external environment input unit 1413, and a behavior plan drive unit 1414.

The external environment input unit 1433 receives the recognition result stream extracted from the actual machine 100 and writes (updates) the state storage unit 1012.

The evaluation target behavior plan holding unit 1411 holds program and data of one or more behavior plans to be evaluated in the behavior verification software 1400. The behavior plan drive unit 1434 reads from the behavior plan holding unit 1431 the program and data of the behavior plan in which the problem has occurred on the side of the actual machine 100, refers to information regarding the internal state and external environment sequentially input from the state storage unit 1432 as a recognition result stream, and selects the defined operation to be displayed according to the internal state or the external environment so as to reproduce the environment at the time when the failure occurs on the side of the actual machine 100 in which the same behavior plan has been driven.

The behavior verification scenario holding unit 1402 holds a behavior verification scenario for each behavior plan. The behavior verification scenario is a program and data defining the order of desirable (or ideal) defined operation to be selected from the behavior plan according to changes in the expected external environment. The behavior verification scenario is, for example, the order of defined operation that the developer of the behavior plan program considers to be ideal with respect to changes in the assumed external environment.

The scenario evaluation unit 1401 reads a behavior verification scenario corresponding to the behavior plan that has been driven in the actual machine 100 in which the failure has occurred, from the behavior verification scenario holding unit 1402. Then, the scenario evaluation unit 1401 evaluates or verifies the behavior plan under the failure occurrence environment that has been reproduced on the basis of result of comparing the defined operation sequentially selected by the behavior plan drive unit 1434 according to the real environment around the actual machine with the order of the defined operation defined in the behavior verification scenario.

The first step in repairing software failure is to reproduce the failure. A case is also assumed where problems that occur in the user's environment cannot be reproduced in the developer's environment. The reason is that the situation is special that exists only in the user's environment and does not exist in the developer's environment.

In the present embodiment, only the information stored in the state storage unit is treated as a state to drive the behavior plan (for example, see Figs. 8 to 10). Therefore, in the system configuration shown in Fig. 14, the state stored in the state storage unit 1432 when the failure of the software occurs in the actual machine 100 is extracted as a recognition result stream, and is transferred to the development device 200 that executes the behavior verification software 1400, so that the failure that has occurred in the user's environment can be reproduced reliably also in the developer's environment. As a result, the developer can easily analyze the failure and repair the software.

The advantages of the technology disclosed herein are listed below.

### - Verification and development ease

A GUI environment (see Fig. 13) that constructs the behavior verification scenario that summarizes the verification items for executing the behavior plan is provided, so that the level of difficulty of verification item development that was conventionally difficult for other than programmers can be reduced.

### -Improvement of evaluation and verification, and speedup

The recognition result defined in advance is input to drive the behavior plan, so that the behavior plan can be evaluated and verified in a very short time.

### - Reproducibility

In the behavior verification software in the single operation mode, the behavior plan is evaluated and verified in a perfect ideal environment without using a module such as a real environment recognition unit that recognizes the external environment of the actual machine, so that evaluation results with reproducibility can be obtained.

### - Concurrent development ease

In the behavior verification software in the single operation mode, the behavior plan can be evaluated and verified using the ideal pseudo recognition result stream defined together with the behavior verification scenario. In other words, without waiting for the development of other modules such as a virtual environment recognition unit used in the simulator mode and a real environment recognition unit used in the actual machine operation mode, evaluation and verification of the behavior plan can be started. As a result, development of a recognition system program that controls behavior according to a recognition result such as a behavior plan can be performed completely independently of the operation control program that controls the actual machine operation of the autonomous operation device 100.

### - Ease of identification of failure position

According to the technology disclosed in the present specification, the behavior plan can be evaluated and verified alone using the single operation mode of the behavior verification software. Therefore, the integrated evaluation of the behavior plan can be started on the premise that the single evaluation has passed, so that it becomes easy to narrow down the position where the failure has occurred.

### - Diversion of behavior verification scenario

The behavior verification scenario used in the single operation mode of the behavior verification software can be used without changing also in the simulation mode and the actual machine operation mode. Therefore, even when the execution environment of the behavior plan control software changes, the work of writing new evaluation items and verification code is unnecessary.

### INDUSTRIAL APPLICABILITY

The technology disclosed in the present specification has been described in detail with reference to specific embodiments. However, it is obvious that those skilled in the art can make modifications and substitutions of the embodiments without departing from the gist of the technology disclosed in the present specification.

The technology disclosed in the present specification may be used to evaluate and verify the operation of the application program that realizes autonomous or adaptive behavior of the autonomous operation device such as a robot, an autonomous vehicle, or an unmanned aerial vehicle (drone). Rather than developing different behavior plans for different types of vehicles and different types of models, a model is more realistic in which one behavior plan is carefully evaluated in the execution environment abstracted on each type of vehicles and each type of models, and it is considered that the behavior plan evaluation and verification method as shown in Figs. 8 to 10 is suitable.

Furthermore, the technology disclosed herein may also be applied to AI development of a video game character of which operation is controlled using an behavior plan. In game development, the process of evaluating and verifying the behavior plan in the actual machine operation environment is omitted, and the other processes are basically similar to the process of developing the behavior plan of an autonomous operation device such as a robot.

In short, the technology disclosed in the present specification has been described in the form of exemplification, and the contents of the description of the present specification should not be interpreted restrictively. In order to determine the gist of the technology disclosed in the present specification, the scope of claims should be taken into consideration.

Note that the technology disclosed in the present specification may have the following configuration.
(1) An information processing apparatus that processes a program described so that an adaptive control device executes operation according to the environment, the information processing apparatus including:
   a holding unit that holds a behavior verification scenario that defines the order of operation to be invoked; and
   an evaluation unit that compares operation that the program sequentially invokes with the behavior verification scenario to perform evaluation or verification of the program.
(2) The information processing apparatus according to (1) described above, further including
   a program execution control unit that controls driving of the program according to environment information input from the outside,
   in which the evaluation unit compares the operation sequentially invoked by the program driven by the program execution control unit according to the environment information with the order of the operation defined in the behavior verification scenario to evaluate and verify the program.
(3) The information processing apparatus according to (2) described above,
   in which the program execution control unit invokes operation according to pseudo environment information input from the outside, and
   the evaluation unit compares the operation sequentially invoked by the program driven by the program execution control unit according to the pseudo environment information with the order of the operation defined in the behavior verification scenario to evaluate and verify the program.
(4) The information processing apparatus according to (3) described above, further including
   a pseudo environment information output unit that outputs the pseudo environment information defined on an assumption that operation according to the behavior verification scenario is invoked in order, to the program execution control unit.
(5) The information processing apparatus according to (1) described above,
   in which the evaluation unit compares operation sequentially invoked by the program driven by a simulator of the adaptive control device with an order of operation defined in the behavior verification scenario to evaluate or verify the program.
(6) The information processing apparatus according to (5) described above,
   in which the simulator drives the program according to virtual environment information obtained by recognizing a virtual environment in the simulator, and
   the evaluation unit compares operation sequentially invoked by the program driven by the simulator according to the virtual environment information with an order of operation defined in the behavior verification scenario to evaluate and verify the program.
(7) The information processing apparatus according to (1) described above,
   in which the evaluation unit compares operation sequentially invoked by the program actually driven on the adaptive control device with an order of operation defined in the behavior verification scenario to evaluate or verify the program.
(8) The information processing apparatus according to (7) described above,
   in which the adaptive control device further includes a recognition unit that recognizes environment information,
   the program driven on the adaptive control device invokes operation according to real environment information recognized in the recognition unit, and
   the evaluation unit compares the operation sequentially invoked by the program driven by the adaptive control device according to real environment information recognized in the recognition unit with the order of the operation defined in the behavior verification scenario to evaluate and verify the program.
(9) The information processing apparatus according to (2),
   in which the program execution control unit externally inputs environment information recognized in an adaptive control device that drives the program to control driving of the program, and
   the evaluation unit compares operation sequentially invoked by the program driven by the program execution control unit according to environment information recognized in the adaptive control device that drives the program with the order of the operation defined in the behavior verification scenario to evaluate and verify the program.
(10) The information processing apparatus according to any of (1) to (9) described above,
   in which the evaluation unit compares an order of operation invoked by the program to be evaluated with an order defined in the behavior verification scenario, and detects abnormality of the program in a case where the orders are not identical.
(11) An information processing method for processing a program described so that an adaptive control device executes operation according to the environment, the information processing method including:
   a step of reading a behavior verification scenario that defines the order of operation to be invoked; and
   an evaluating step of comparing operation that the program sequentially invokes with the behavior verification scenario to perform evaluation or verification of the program.
(12) A computer program described in a computer readable format so as to function as:
   a holding unit that holds a behavior verification scenario that defines an order of operation to be invoked; and
   an evaluation unit that compares operation that the program described so that an adaptive control device executes operation according to an environment sequentially invokes with the behavior verification scenario to perform evaluation or verification of the program.
(13) A program manufacturing method for manufacturing a control program in which an adaptive control device controls operation according to the environment, the program manufacturing method including:
   a behavior scenario setting step of setting to the control program a behavior verification scenario that defines an order of operation to be invoked; and
   a verification condition setting step of setting to the control program a condition for comparing operation sequentially invoked by the program with the behavior verification scenario to perform evaluation or verification of the program.

### REFERENCE SIGNS LIST

- 100: Autonomous operation device (actual machine)
- 110: Main body unit
- 111: Processor
- 112: Memory
- 113: Communication modem
- 114: Battery
- 115: USB port
- 116: GPS
- 120: Module unit
- 121: Actuator
- 122: Processor
- 123: Memory
- 124: Sensor
- 125: Communication modem
- 200: Development device
- 210: Computer main body unit
- 211: Processor
- 212: GPU
- 213: Memory
- 214: USB port
- 215: Communication modem
- 220: Display
- 230: User interface
- 800: Behavior verification software (single operation mode)
- 801: Scenario evaluation unit
- 802: Behavior verification scenario holding unit
- 803: Pseudo recognition result stream output unit
- 810: Behavior plan control unit
- 811: Evaluation target behavior plan holding unit
- 812: State storage unit
- 813: External environment input unit
- 814: Behavior plan drive unit
- 900: Behavior verification software (simulation mode)
- 901: Scenario evaluation unit
- 902: Behavior verification scenario holding unit
- 903: Virtual environment recognition unit
- 910: Behavior plan control unit
- 911: Evaluation target behavior plan holding unit
- 912: State storage unit
- 913: External environment input unit
- 914: Behavior plan drive unit
- 1000: Behavior verification software (actual machine operation mode)
- 1001: Scenario evaluation unit
- 1002: Behavior verification scenario holding unit
- 1003: Real environment recognition unit
- 1010: Behavior plan control unit
- 1011: Evaluation target behavior plan holding unit
- 1012: State storage unit
- 1013: External environment input unit
- 1014: Behavior plan drive unit

## Claims

1. An information processing apparatus that processes a program described so that an adaptive control device executes operation according to an environment, the information processing apparatus comprising:
a holding unit that holds a behavior verification scenario that defines an order of operation to be invoked; and
an evaluation unit that compares operation that the program sequentially invokes with the behavior verification scenario to perform evaluation or verification of the program.

2. The information processing apparatus according to claim 1, further comprising
a program execution control unit that controls driving of the program according to environment information input from an outside,
wherein the evaluation unit compares the operation sequentially invoked by the program driven by the program execution control unit according to the environment information with the order of the operation defined in the behavior verification scenario to evaluate and verify the program.

3. The information processing apparatus according to claim 2,
wherein the program execution control unit invokes operation according to pseudo environment information input from the outside, and
the evaluation unit compares the operation sequentially invoked by the program driven by the program execution control unit according to the pseudo environment information with the order of the operation defined in the behavior verification scenario to evaluate and verify the program.

4. The information processing apparatus according to claim 3, further comprising
a pseudo environment information output unit that outputs the pseudo environment information defined on an assumption that operation according to the behavior verification scenario is invoked in order, to the program execution control unit.

5. The information processing apparatus according to claim 1,
wherein the evaluation unit compares operation sequentially invoked by the program driven by a simulator of the adaptive control device with an order of operation defined in the behavior verification scenario to evaluate or verify the program.

6. The information processing apparatus according to claim 5,
wherein the simulator drives the program according to virtual environment information obtained by recognizing a virtual environment in the simulator, and
the evaluation unit compares operation sequentially invoked by the program driven by the simulator according to the virtual environment information with an order of operation defined in the behavior verification scenario to evaluate or verify the program.

7. The information processing apparatus according to claim 1,
wherein the evaluation unit compares operation sequentially invoked by the program actually driven on the adaptive control device with an order of operation defined in the behavior verification scenario to evaluate or verify the program.

8. The information processing apparatus according to claim 7,
wherein the adaptive control device further includes a recognition unit that recognizes environment information,
the program driven on the adaptive control device invokes operation according to real environment information recognized in the recognition unit, and
the evaluation unit compares the operation sequentially invoked by the program driven by the adaptive control device according to real environment information recognized in the recognition unit with the order of the operation defined in the behavior verification scenario to evaluate or verify the program.

9. The information processing apparatus according to claim 2,
wherein the program execution control unit externally inputs environment information recognized in an adaptive control device that drives the program to control driving of the program, and
the evaluation unit compares operation sequentially invoked by the program driven by the program execution control unit according to environment information recognized in the adaptive control device that drives the program with the order of the operation defined in the behavior verification scenario to evaluate or verify the program.

10. The information processing apparatus according to claim 1,
wherein the evaluation unit compares an order of operation invoked by the program to be evaluated with an order defined in the behavior verification scenario, and detects abnormality of the program in a case where the orders are not identical.

11. An information processing method for processing a program described so that an adaptive control device executes operation according to an environment, the information processing method comprising:
a step of reading a behavior verification scenario that defines an order of operation to be invoked; and
an evaluating step of comparing operation that the program sequentially invokes with the behavior verification scenario to perform evaluation or verification of the program.

12. A computer program described in a computer readable format so as to function as:
a holding unit that holds a behavior verification scenario that defines an order of operation to be invoked; and
an evaluation unit that compares operation that the program described so that an adaptive control device executes operation according to an environment sequentially invokes with the behavior verification scenario to perform evaluation or verification of the program.

13. A program manufacturing method for manufacturing a control program in which an adaptive control device controls operation according to an environment, the program manufacturing method comprising:
a behavior scenario setting step of setting to the control program a behavior verification scenario that defines an order of operation to be invoked; and
a verification condition setting step of setting to the control program a condition for comparing operation sequentially invoked by the program with the behavior verification scenario to perform evaluation or verification of the program.
